# EUROPÄISCHE PATENTANMELDUNG

(11) **EP 2 930 469 A1**
(43) Veröffentlichungstag der Anmeldung: **14.10.2015**
(21) Anmeldenummer: 14164053.2
(22) Anmeldetag: 09.04.2014
(51) Int. Cl.: G01C 21/36

(54) **Verfahren zur Bereitstellung prädiktiver Zielpositionen und/oder prädiktiver Routen zur Erreichung einer Zielposition und Navigationssystem**

(71) Anmelder: Volkswagen Aktiengesellschaft, 38440 Wolfsburg (DE); AUDI AG, 85045 Ingolstadt (DE)
(72) Erfinder: Bartsch, Patrick Dr., 38442 Wolfsburg (DE); Wilkens, Kathrin Dr., 23229 Celle (DE); Gerlach, Simon Dr., 30161 Hannover (DE)

(57) **Zusammenfassung**

Die Erfindung betrifft ein Verfahren zur Bereitstellung prädiktiver Zielpositionen (10) und/oder prädiktiver Routen (11) zur Erreichung einer Zielposition (10), bei dem die aktuelle Ortsposition ermittelt wird und die Zielposition (10) selbsttätig nach Wahrscheinlichkeitsgesichtspunkten anhand eines Vergleichs gespeicherter Fahrinformationen aus der Vergangenheit mit aktuellen Fahrinformationen abgeleitet wird, wobei n mögliche Zielpositionen (10) ermittelt werden, wobei n ≥ 2 ist, wobei die Zielposition (10) als Eingabemöglichkeit für ein Navigationssystem (1) angeboten werden und/oder die prädiktiven Routen (11) mit den Zielpositionen (10) gleichzeitig dargestellt werden, sowie ein Navigationssystem (1).

## Beschreibung

Die Erfindung betrifft ein Verfahren zur Bereitstellung prädiktiver Zielpositionen und/oder prädiktiver Routen zur Erreichung einer Zielposition und ein Navigationssystem.

Aus der DE 195 35 576 A1 ist ein Verfahren zur Zielführungsunterstützung eines Fahrzeugführers zur Erreichung einer Zielposition mit einem Fahrzeug bekannt, bei dem die aktuelle Ortsposition ermittelt, eine Fahrtroute bestimmt und für diese Fahrtroute aktuelle Fahrhinweise von einem außerhalb des Fahrzeugs angeordneten Verkehrsrechner eingeholt und dem Fahrer angezeigt werden, wobei die Zielposition selbsttätig nach Wahrscheinlichkeitsgesichtspunkten anhand eines Vergleichs gespeicherter Fahrinformationen aus der Vergangenheit mit aktuellen Fahrinformationen abgeleitet wird. Um fehlerhafte Fahrhinweisanzeigen möglichst gering zu halten, wird eine Übereinstimmung mit einer Fahrtroute oder Streckenabschnitt in einem Standardfahrtroutenspeicher nur bei einer sehr hohen Wahrscheinlichkeit von beispielsweise 95 % angenommen. Alternativ zu einer automatischen Übernahme einer Fahrtroute wird vorgeschlagen, dass die ermittelte Zielposition vom Fahrer bestätigt werden muss, beispielsweise wenn gebührenpflichtige Dienstleistungen in Anspruch genommen werden. Bei der Ermittlung der Wahrscheinlichkeit können auch Wochentag und/oder Tageszeit berücksichtigt werden.

Ein ähnliches Verfahren für ein on-board-System ist aus der WO 2007/087928 A1 bekannt.

Der Erfindung liegt das technische Problem zugrunde, ein Verfahren zur Bereitstellung prädiktiver Zielpositionen und/oder prädiktiver Routen zur Erreichung einer Zielposition zur Verfügung zu stellen sowie ein Navigationssystem zu schaffen, das benutzerfreundlicher ist und einen Nutzer besser unterstützt.

Die Lösung des technischen Problems ergibt sich durch das Verfahren mit den Merkmalen des Anspruchs 1 sowie ein Navigationssystem mit den Merkmalen des Anspruchs 7. Weitere vorteilhafte Ausgestaltungen ergeben sich aus den Unteransprüchen.

Das Verfahren zur Bereitstellung prädiktiver Zielpositionen und/oder prädiktiver Routen zur Erreichung einer Zielposition weist dabei die Verfahrensschritte auf, dass die aktuelle Ortsposition ermittelt wird und die Zielposition selbsttätig nach Wahrscheinlichkeitsgesichtspunkten anhand eines Vergleichs gespeicherter Fahrinformationen aus der Vergangenheit mit aktuellen Fahrinformationen abgeleitet wird, wobei n mögliche Zielpositionen ermittelt werden, wobei n ≥ 2 ist, wobei die Zielpositionen als Eingabemöglichkeit für ein Navigationssystem angeboten werden und/oder die prädiktiven Routen mit den Zielpositionen gleichzeitig dargestellt werden. Der Grundgedanke dabei ist, dass der Lösungsansatz aus dem Stand der Technik möglichst genau eine einzige prädiktive Route zu ermitteln häufig zu Frustrationen beim Nutzer führt. Liegen viele potentielle Zielpositionen dicht beieinander, so wird relativ spät erst eine sehr hohe Wahrscheinlichkeit erreicht. Des Weiteren ist die Frustration noch größer, wenn die einzig ausgewählte Zielposition auch noch falsch ist. Erfindungsgemäß werden daher mindestens zwei Zielpositionen und/oder Routen dargestellt, wobei umgekehrt n auch nicht zu groß gewählt werden sollte. Vorzugsweise ist 2 ≤ n ≤ 10, weiter vorzugsweise 2 ≤ n ≤ 5. Einen sehr guten Kompromiss stellt dabei n = 3 dar.

Dabei kann vorgesehen sein, dass zunächst nur die potentiellen Zielpositionen mit der größten Wahrscheinlichkeit angeboten werden, beispielsweise in Form einer Liste. Unabhängig von der Darstellungsform können dabei die Zielpositionen nach ihrer Wahrscheinlichkeit sortiert sein. Dabei kann dann vorgesehen sein, dass bei Auswahl einer Zielposition als Eingabe für das Navigationssystem die derart ausgewählte prädiktive Route berechnet wird oder aus den Fahrinformationen übernommen wird. Ebenso kann alternativ oder kumulativ vorgesehen sein, dass bereits die prädiktiven Routen angezeigt werden, wobei der Nutzer sich bedarfsweise eine auswählen kann.

Die Darstellung der prädiktiven Routen mit den Zielpositionen kann dabei sehr unterschiedlich erfolgen. Beispielsweise können die prädiktiven Routen in einer 2D-Kartendarstellung und/oder in Form einer Liste dargestellt werden. Weiter kann vorgesehen sein, dass zunächst die prädiktiven Routen in Form einer Liste dargestellt werden, wobei bei Auswahl einer prädiktiven Route aus der Liste diese ausgewählte prädiktive Route in einer 2D-Kartendarstellung erfolgt. Weiter kann vorgesehen sein, dass die prädiktiven Routen in einer 2D-Kartendarstellung dargestellt werden, wobei nur die Zielpositionen und gegebenenfalls Zwischenziele listenförmig dargestellt werden. Dabei sei angemerkt, dass die listenförmige Darstellung eine alphanumerische Darstellung ist.

Prinzipiell ist es auch denkbar, dass die Zielpositionen auch ohne Fahrinformationen aus der Vergangenheit ermittelt werden, wobei jedoch dann die Fehlzuordnungen steigen.

In einer Ausführungsform wird die aktuelle Ortsposition kontinuierlich ermittelt, wobei die Zielpositionen und/oder Routen kontinuierlich in Abhängigkeit der Änderung der Ortsposition nachgeführt werden. Beispielsweise bewegt sich das Kraftfahrzeug zunächst vom Punkt A nach B, wobei n1 - n3 die wahrscheinlichsten Zielpositionen sind. Wählt dann der Nutzer keine Zielposition aus und bewegt sich weiter nach C, so ändert sich die Wahrscheinlichkeit für die Zielpositionen und beispielsweise n3 - n5 werden angezeigt. Dadurch nimmt die Wahrscheinlichkeit zu, dem Nutzer die gewünschte Zielposition anzubieten.

In einer weiteren Ausführungsform weisen die gespeicherten Fahrinformationen aus der Vergangenheit Zwischenziele auf, die bei der Berechnung der prädiktiven Route oder Routen berücksichtigt werden. Ein solches Zwischenziel kann beispielsweise ein regelmäßiger Zwischenstopp (wie beispielsweise eine Bäckerei auf dem Weg zur Arbeit) sein. Dies erhöht die Wahrscheinlichkeit eine Route zu schätzen, die der Nutzer tatsächlich so beabsichtigt zu fahren.

Allerdings ist es nicht zwingend, die Zwischenziele bei den gespeicherten Fahrinformationen aus der Vergangenheit als Zwischenziele abzuspeichern, um diese bei den prädiktiven Routen zu berücksichtigen. So kann beispielsweise vorgesehen sein, dass mit der Abschaltung der Zündung (oder einem vergleichbaren Betriebssignal bei einem Elektrofahrzeug) eine Route als abgeschlossen gilt, die dann als Fahrinformation aus der Vergangenheit abgespeichert wird. Beim Wiederstarten des Kraftfahrzeugs vom Zwischenziel zur eigentlichen Zielposition wird dann erneut eine Route aufgezeichnet und zu den Fahrinformationen aus der Vergangenheit abgespeichert. Wenn dann beispielsweise morgens der Kraftfahrzeugführer losfährt, wird ihm als mindestens eine prädiktive Route die Route zum Zwischenziel (z.B. Bäckerei) und eine alternative Route zur Arbeitsstelle angeboten. Wählt dann der Kraftfahrzeugführer die Route zum Zwischenziel aus, so wird diese dargestellt. Wenn dann der Kraftfahrzeugführer vom Zwischenziel wieder startet, so wird ihm mindestens die Route vom Zwischenziel zur Arbeitsstelle als prädiktive Route dargestellt.

Wie diese Zwischenstopps bzw. Zwischenziele berücksichtigt werden, hängt also unter anderem davon ab, wie das Kriterium einer abgeschlossenen Route gewählt wird.

Dabei sei angemerkt, dass eine Zielführung auf der prädiktiven Route auch still erfolgen kann (ohne Manöveransagen). Vorzugsweise ist dies durch den Nutzer einstellbar. Dabei kann auch vorgesehen sein, dass bei bestimmten Ereignissen automatisch von stiller Zielführung auf Manöveransage umgeschaltet werden kann.

In einer weiteren Ausführungsform werden aktuelle Verkehrsnachrichten einer möglichen Zielposition und/oder einer prädiktiven Route zugeordnet. Dabei ist anzumerken, dass eine aktuelle Verkehrsnachricht auch ein solches Ereignis sein kann, um auf Manöveransagen umzuschalten.

Die Berücksichtigung der Verkehrsinformationen erfolgt dabei vorzugsweise kontinuierlich, sodass Auswirkungen auf eine Route dem Nutzer kontinuierlich dargestellt werden und bestimmte Systemreaktionen ausgelöst werden, wie beispielsweise Aktualisierung der Ankunftszeit und/oder eine Warnung des Nutzers. Die Art der Warnung kann dabei sehr unterschiedlich sein.

Beispielsweise kann vorgesehen sein, dass, wenn es für die derzeit wahrscheinlichste Route (oder für eine Route, deren Wahrscheinlichkeit größer als ein bestimmter Schwellwert ist) eine Verkehrsstörung gibt, die die Ankunftszeit auf dieser Route um mehr als eine vorbestimmte Zeit (z.B. 5 Minuten) verzögert, dem Nutzer eine Warnung ausgegeben wird (z.B. ein Popup, eine Sprachausgabe). Damit soll der Nutzer auch dann auf das mögliche Problem hingewiesen werden, wenn dieser beispielsweise noch gar nicht im Navigationsmenü war oder nicht auf die Anzeigeeinheit geachtet hat.

In einer weiteren Ausführungsform wird eine Alternativroute zu einem Zielpunkt berechnet oder eine Berechnung angeboten, so dass der Nutzer generell einen höheren Freiheitsgrad hat und im Speziellen mit den Verkehrsnachrichten beispielsweise Hilfestellung zum Umfahren von Unfall- oder Staustellen erhält. Vorzugsweise ist dabei vorgesehen, dass, wenn eine Route ausgewählt wird, für die zu diesem Zeitpunkt bereits bekannt ist, dass eine Verkehrsstörung vorliegt, dem Nutzer sofort Alternativrouten angezeigt werden.

In einer weiteren Ausführungsform werden die Routen und/oder Alternativrouten unter Berücksichtigung von eingestellten und/oder vorab abgelegten Fahrerpräferenzen berechnet. Derartige Fahrerpräferenzen können beispielsweise sein "Vermeidung von gebührenpflichtigen Straßen", "keine Fähren", "kürzeste Route", "schnellste Route".

Zusätzlich oder alternativ können die Alternativrouten auch aus den Fahrinformationen aus der Vergangenheit abgeleitet werden.

Das Navigationssystem zur Bereitstellung prädiktiver Zielpositionen und/oder prädiktiver Routen zur Erreichung einer Zielposition umfasst eine Recheneinheit mit einer Datenbasis, eine Anzeigeeinheit, Mittel zur Erfassung einer Ortsposition sowie einen Speicher mit Fahrinformationen aus der Vergangenheit, wobei das Navigationssystem derart ausgebildet ist, dass die aktuelle Ortsposition ermittelt wird und die Zielposition selbsttätig nach Wahrscheinlichkeitsgesichtspunkten anhand eines Vergleichs der gespeicherten Fahrinformationen aus der Vergangenheit mit aktuellen Fahrinformationen (z B. Richtung der Fahrzeugbewegung) abgeleitet wird, wobei das Navigationssystem derart ausgebildet ist, dass n mögliche Zielpositionen ermittelt werden, wobei n ≥ 2 ist, wobei die Zielpositionen als Eingabemöglichkeit für das Navigationssystem angeboten werden und/oder die prädiktiven Routen mit den Zielpositionen gleichzeitig auf der Anzeigeeinheit dargestellt werden. Dabei sei angemerkt, dass n nicht konstant sein muss, sondern situativ sich verändern kann. So sind auch Situationen denkbar, wo n = 1, da nur eine Zielposition wahrscheinlich ist.

Die Erfindung wird nachfolgend anhand eines bevorzugten Ausführungsbeispiels näher erläutert. Die Fig. zeigen:
- Fig. 1: ein schematisches Blockschaltbild eines Navigationssystems,
- Fig. 2: eine beispielhafte Darstellung auf einer Anzeigeeinheit von möglichen Zielpositionen und prädiktiven Routen und
- Fig. 3: eine beispielhafte Darstellung bei Auswahl einer prädiktiven Route.

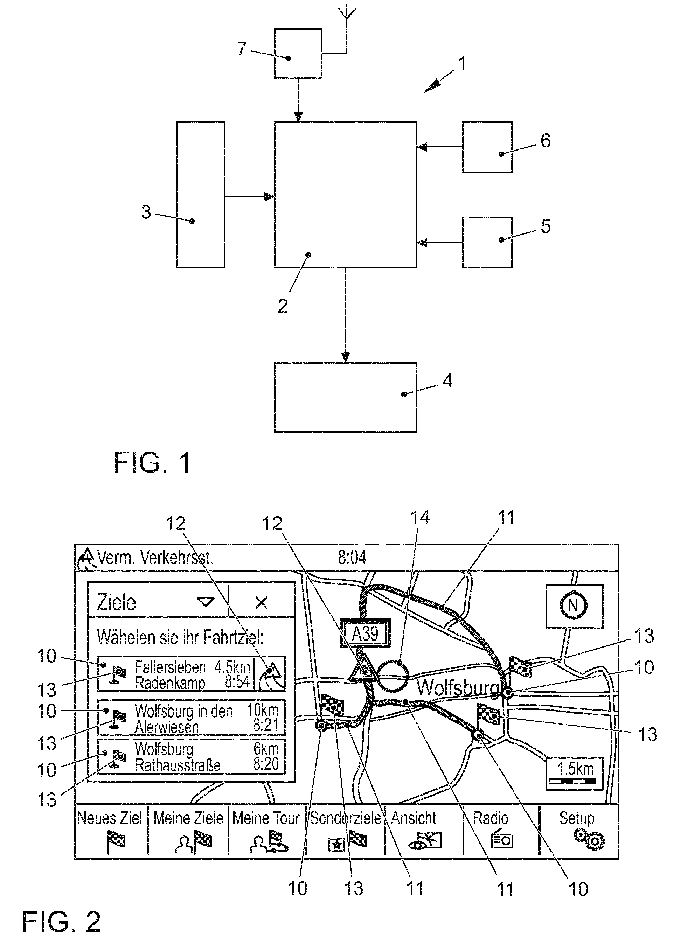

In der Fig. 1 ist ein schematisches Blockschaltbild eines Navigationssystems 1 dargestellt, umfassend eine Recheneinheit 2 mit einer Datenbasis 3, eine Anzeigeeinheit 4, mindestens ein Mittel 5 zur Erfassung einer Ortsposition sowie einen Speicher 6 mit Fahrinformationen aus der Vergangenheit. Weiter ist ein Modul 7 dargestellt, mittels dessen Verkehrsinformationen empfangbar und an die Recheneinheit 2 weiterleitbar sind. Das Modul 7 ist beispielsweise als GSM-Modul ausgebildet. Die Mittel 5 sind beispielsweise als GPS-Empfänger ausgebildet. Die Datenbasis 3 ist beispielsweise eine digitale Straßenkarte, wobei die Datenbasis 3 auch in der Recheneinheit 2 angeordnet sein kann. In dem Speicher 6 sind in der Vergangenheit befahrene Routen und/oder Zielpositionen abgelegt. Diese Routen und/oder Zielpositionen können in der Vergangenheit über das Navigationssystem berechnete Routen und/oder eingegebene Zielpositionen sein. Alternativ oder kumulativ sind dies Routen und/oder Zielpositionen, die ohne Zielführung befahren wurden und abgespeichert wurden. Den Routen und/oder Zielpositionen können dabei Häufigkeiten und/oder andere Parameter wie Tageszeit und Wochentag zugeordnet sein. Des Weiteren sind (wenn vorhanden) den Routen Zwischenziele zugeordnet.

Fährt nun das Kraftfahrzeug los, ohne dass eine Zielposition in das Navigationssystem 1 eingegeben wurde (beispielsweise über die als Touch-Screen ausgebildete Anzeigeeinheit 4), so wird zunächst die aktuelle Ortsposition des Kraftfahrzeuges ermittelt. Anschließend werden mehrere Ortspositionen nacheinander über eine gewisse vorab festgelegte Strecke (z.B. 1 Kilometer) aufgenommen und ein Übereinstimmungsmaß dieser Strecke mit Teilen von aufgenommenen Routen aus den Fahrerinformationen aus der Vergangenheit ermittelt. Dieses Übereinstimmungsmaß wird vorzugsweise ermittelt über die Abstände der einzelnen aufgenommenen Ortspositionen zu den aufgenommenen Routen. Aus den Einzelabständen wird dann über ein mathematisches Verfahren (z.B. Summe, Durchschnitt, Median etc.) ein Gesamtmaß ermittelt. Neben den Abständen wird zusätzlich noch der aktuelle Zeitpunkt und Datum mit dem Wiederholungsmuster der historischen Route verglichen und bei der Ermittlung der wahrscheinlichsten Route berücksichtigt.

Als Ergebnis werden mögliche (prädiktive) Zielpositionen 10 und prädiktive Routen 11 durch die Recheneinheit 2 ermittelt und auf der Anzeigeeinheit 4 dargestellt. Zusätzlich werden der jeweiligen Zielposition 10 noch Länge und geschätzter Ankunftszeit zugeordnet. Existieren Verkehrsinformationen, die eine Route 11 zu einer Zielposition 10 betreffen, so werden diese ebenfalls der Zielposition 10 als auch der Route 11 beispielsweise als Piktogramm 12 zugeordnet. Wird das Piktogramm 12 ausgewählt, erhält der Nutzer detaillierte Informationen über die Verkehrsinformation. Die Liste an prädiktiven Zielpositionen 10 kann dabei nach Wahrscheinlichkeit sortiert sein. In der Liste sind die Zielpositionen 10 alphanumerisch dargestellt. Daneben werden die prädiktiven Routen 11 in einer 2D-Kartendarstellung dargestellt. Dabei können die prädiktiven Routen 11 z. B. in unterschiedlichen Farben dargestellt werden. Weiter kann dabei vorgesehen sein, dass die Zielpositionen 10 in der Liste eine zur zugeordneten Route 11 korrespondierende Farbe aufweisen. Im dargestellten Beispiel sind alle drei (n = 3) Zielpositionen 10 mit einer Zielflagge 13 gekennzeichnet. Dabei ist die Zielflagge 13 sowohl in der listenförmigen Darstellung der Zielpositionen 10 als auch in der dargestellten Route 11 als Zielposition 10 dargestellt.

Dabei kann auch vorgesehen sein, dass die Zielflaggen 13 für die verschiedenen Zielpositionen 10 unterschiedlich ausgebildet sind, sodass die Zuordnung zwischen listenförmiger Zielposition 10 und in der Karte dargestellten Zielpositionen erleichtert wird. Weiter wird die aktuelle Ortsposition in der 2D-Karte durch einen Kreis 14 oder Ähnliches gekennzeichnet. An der Unterkante der Anzeigeeinheit 4 werden dem Nutzer alternative Eingabemöglichkeiten angeboten, die hier nicht näher betrachtet werden sollen.

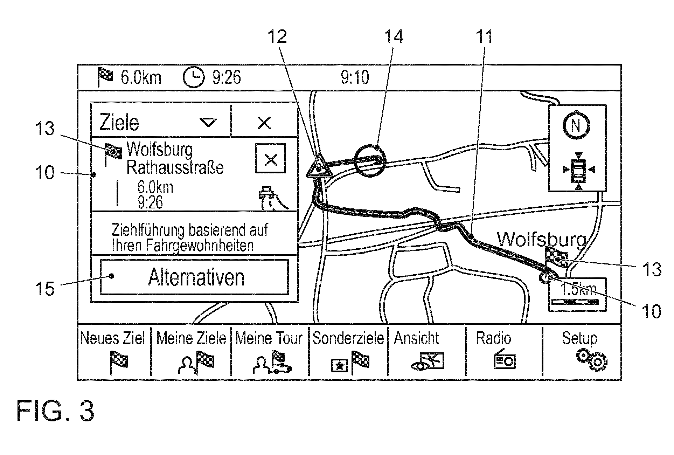

Wählt der Nutzer nun eine Zielposition 10 oder eine prädiktive Route 11 (z.B. durch Berührung) aus, so wechselt die Darstellung gemäß Fig. 2 zu einer Darstellung gemäß Fig. 3. Dort wird nur noch die ausgewählte prädiktive Route in der 2D-Kartendarstellung angezeigt. Zusätzlich wird der ausgewählten Zielposition 10 ein Eingabefeld 15 angeboten, um eine oder mehrere Alternativrouten zur Zielposition 10 zu berechnen.

## Patentansprüche

1. Verfahren zur Bereitstellung prädiktiver Zielpositionen (10) und/oder prädiktiver Routen (11) zur Erreichung einer Zielposition (10), bei dem die aktuelle Ortsposition ermittelt wird und die Zielposition (10) selbsttätig nach Wahrscheinlichkeitsgesichtspunkten anhand eines Vergleichs gespeicherter Fahrinformationen aus der Vergangenheit mit aktuellen Fahrinformationen abgeleitet wird,
**dadurch gekennzeichnet, dass**
n mögliche Zielpositionen (10) ermittelt werden, wobei n ≥ 2 ist, wobei die Zielposition (10) als Eingabemöglichkeit für ein Navigationssystem (1) angeboten werden und/oder die prädiktiven Routen (11) mit den Zielpositionen (10) gleichzeitig dargestellt werden.

2. Verfahren nach Anspruch 1, **dadurch gekennzeichnet, dass** die aktuelle Ortsposition kontinuierlich ermittelt wird, wobei die Zielposition (10) und/oder Routen (11) kontinuierlich in Abhängigkeit der Änderung der Ortsposition nachgeführt werden.

3. Verfahren nach Anspruch 1 oder 2, **dadurch gekennzeichnet, dass** die gespeicherten Fahrinformationen aus der Vergangenheit Zwischenziele aufweisen, die bei der Berechnung der prädiktiven Route (11) oder Routen (11) berücksichtigt werden.

4. Verfahren nach einem der vorangegangenen Ansprüche, **dadurch gekennzeichnet, dass** aktuelle Verkehrsnachrichten einer möglichen Zielposition (10) und/oder prädiktiven Route (11) zugeordnet werden.

5. Verfahren nach einem der vorangegangenen Ansprüche, **dadurch gekennzeichnet, dass** eine Alternativroute zu einem Zielpunkt (10) berechnet wird oder eine Berechnung angeboten wird.

6. Verfahren nach einem der vorangegangenen Ansprüche, **dadurch gekennzeichnet, dass** die Routen (11) und/oder Alternativrouten unter Berücksichtigung von eingestellten und/oder vorab abgelegten Fahrerpräferenzen berechnet werden.

7. Navigationssystem (1) zur Bereitstellung prädiktiver Zielpositionen (10) und/oder prädiktiver Routen (11) zur Erreichung einer Zielposition (10), umfassend eine Recheneinheit (2) mit einer Datenbasis (3), eine Anzeigeeinheit (4), Mittel (5) zur Erfassung einer Ortsposition sowie einem Speicher (6) mit Fahrerinformationen aus der Vergangenheit, wobei das Navigationssystem (1) derart ausgebildet ist, dass die aktuelle Ortsposition ermittelt wird und die Zielposition (10) selbsttätig nach Wahrscheinlichkeitsgesichtspunkten anhand eines Vergleichs der gespeicherten Fahrinformationen aus der Vergangenheit mit aktuellen Fahrinformationen abgeleitet wird,
**dadurch gekennzeichnet, dass**
das Navigationssystem (1) derart ausgebildet ist, dass n mögliche Zielpositionen (10) ermittelt werden, wobei n ≥ 2 ist, wobei die Zielpositionen (10) als Eingabemöglichkeit für das Navigationssystem (1) angeboten werden und/oder die prädiktiven Routen (11) mit den Zielpositionen (10) gleichzeitig auf der Anzeigeeinheit (4) dargestellt werden.

8. Navigationssystem nach Anspruch 7, **dadurch gekennzeichnet, dass** das Navigationssystem (1) derart ausgebildet ist, dass die aktuelle Ortsposition kontinuierlich ermittelt wird, wobei die Zielpositionen (10) und/oder Routen (11) kontinuierlich in Abhängigkeit der Ortsposition nachgeführt werden.

9. Navigationssystem nach Anspruch 7 oder 8, **dadurch gekennzeichnet, dass** die gespeicherten Fahrinformationen aus der Vergangenheit Zwischenziele aufweisen, wobei das Navigationssystem (1) derart ausgebildet ist, dass die Zwischenziele bei der Berechnung der prädiktiven Route (11) oder Routen (11) berücksichtigt werden.

10. Navigationssystem nach einem der Ansprüche 7 bis 9, **dadurch gekennzeichnet, dass** das Navigationssystem (1) derart ausgebildet ist, dass aktuelle Verkehrsnachrichten einer möglichen Zielposition (10) und/oder prädiktiven Route (11) zugeordnet werden.
